# EUROPEAN PATENT APPLICATION

(11) **EP 1 650 668 A1**
(43) Date of publication of application: **26.04.2006**
(21) Application number: 04746138.9
(22) Date of filing: 18.06.2004
(51) Int. Cl.: G06F 12/14, G06F 3/06, G06F 12/00, G06F 15/00, H04L 9/32

(54) **ELECTRONIC INFORMATION MANAGEMENT SYSTEM**

(30) Priority: 18.07.2003 JP 2003199514
(71) Applicant: Global Friendship Inc., Tokyo 160-0004 (JP)
(72) Inventor: YASUKURA, Yutaka, 1510072 (JP)
(74) Representative: Leinweber & Zimmermann
(86) International application number: PCT/JP2004/008636
(87) International publication number: WO 2005/008503

(57) **Abstract**

There is provided an information operation management system having a high safety of the information stored. The system is a computer system performing user authentication and presenting electronic information attribution to the user. Electronic information (31) on user authentication information and user attribution electronic information (32) are respectively divided into division information 31 a, 31 b; 32a, 32b, which are stored in separate files 22a, 22b; 23a, 23b. When presentation of electronic information is requested, the electronic information 31 a, 31 b on the user authentication information are collected from the files authentication. When the authentication is successful, the user attribution electronic information 32a, 32b are collected from the respective files so as to be restored and presented.

## Description

### Technical Field

The present invention relates to an electronic information management system configured not to provide stored electronic information to anyone except an authorized user.

### Background Arts

A configuration is now developing in which information of individual privacy or information attributable to an individual, such as financial information including customer's deposits or loans managed by banks, medical information including patient's medical records held by medical institutions, information of customer's assets from stock companies, administrative information including family registrations and resident cards, company's inside information, or copyright information, is preliminarily stored in storage associated with a computer of an information management system and then the desired information is extracted or read out, and used at need through a computer network such as the Internet. Such an information management system applied to the abovementioned configuration may be used by a large number of persons unrelated to the individual information, and therefore it is required to configure the system so that only the users authorized to access the individual information can extract or read out the information.

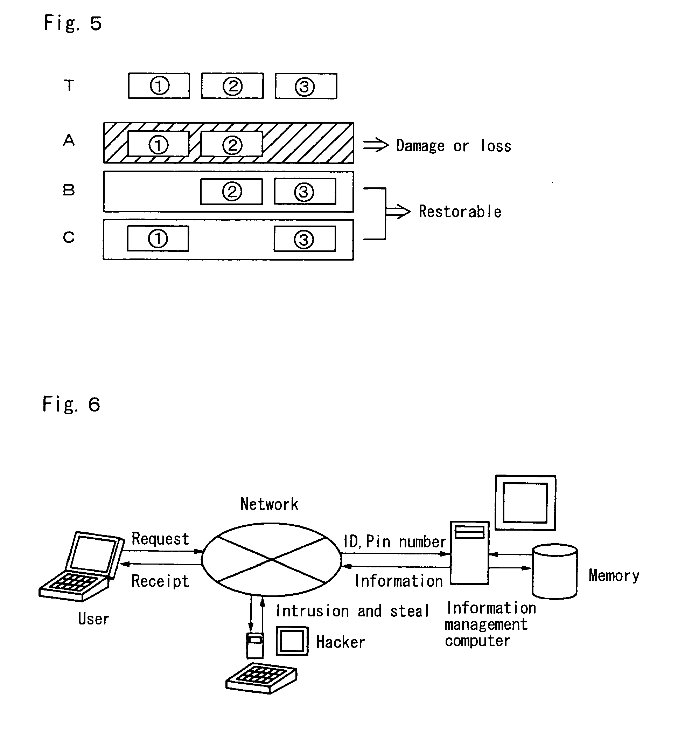

As exemplified in Fig. 6, consistency between each of the terminal devices and an information management unit is examined first in the case of a conventional system in which a large number of customer terminal devices are connected to an information management computer through network communication paths. Connection between them is not permitted until the terminal device is identified as one of the member devices in the system. Further, electronic information stored in the storage is neither extracted nor sent to the terminal device until a person operating the terminal device is identified as a registered member with an identification number (ID) and a pass word (PIN). A method in which a person is provided with his/her subject information only when he/she is identified as a member of the system through user authentication has been generally used in order to protect electronic information in a computer network.

The authentication is a scheme for identifying a user and for granting authority to a user passed the user identification. In a current authentication scheme, the entirety of the prior registered information for identifying users is operated and managed, and when a user provides authentication information that is identical to the previously input identification information of the user or within a given fluctuation margin of it, the system side considers the user as the authentic user and grants specific authority or discloses his attribution information to the user.
For example, patent document 1 discloses a financial information service system which stores customer attribution information of attribute, history, and such items managed by a bank for the customers and delivers the information to the customer's personal computer through the network.

A computer network cannot easily prevent criminals for pleasure or crackers from intruding into a computer system through network communication paths, cunningly corrupting the computer system itself or its part such as the operating system, and obtaining or modifying information managed by the system.
For this reason, even a conventional method for protecting information by user authentication has a risk that, for example, an unauthorized third party may steal user authentication information to masquerade as a user or to steal the user attribution information entirely.
Patent document 2 discloses an authentication system as the technology to minimize such a risk, in which authentication information is divided, one component of the divided user authentication information is assigned to the system side and the other component is assigned to the user side as registered information, and user authentication is implemented by producing and restoring or decrypting the original user authentication information after collecting the dispersedly managed electronic information.
Patent document 1: Japan Laid-Open Patent Publication No. 2002-007697
Patent document 2: Japan Laid-Open Patent Publication No. 2002-312317

### Disclosure of the Invention

### Problems to be Solved by the Invention

It is an object of the present invention to provide an information operation management system in which the security of stored information is enhanced without hampering convenience.

### Means for Solving Problems

In order to solve the above described problem, an electronic information management system of the present invention is configured as a computer system for presenting or providing a user attribution electronic information attributable to the user after authenticating the user, the system comprising a processing unit and a plurality of files, in which the processing unit divides each of electronic information of user authentication information and user attribution information into pieces and stores the pieces in separate files, saves storage information explaining storing procedures of the pieces in public information files, and when the processing unit receives a request of presenting or providing a user attribution information, the processing unit extracts the storage information from one of the public information files and collects the pieces of the electronic information of the user authentication information from the separate files based on the storage information to restore or decrypt the user authentication information, compares the restored or decrypted user authentication information with user input authentication information to identify the user, and the processing unit collects the pieces of the electronic information of the user attribution information from the respective files, restores or decrypts the user attribution information and presents or provides the restored or decrypted information to the user, only after the user authentication is passed.

In the electronic information management system of the present invention, it is difficult for an unauthorized person to collect all pieces of the divided electronic information necessary for restoration when he or she accesses them because necessary electronic information is divided and the divided pieces of the information are separately stored in a plurality of files. Accordingly, the risk is low to be stolen with authentication information necessary to masquerade as a user. Also, if divided pieces of electronic information of user attribution information cannot be collected, and the information cannot be restored nor decrypted, until user authentication is passed, stealing the user attribution information is further and dramatically difficult and therefore the security of information is high.

The dividing procedure of the user authentication electronic information and the user attribution electronic information is preferably implemented by dividing the electronic information at designated bit positions into a plurality of small information elements, permuting the plurality of the information elements in an order which is designated using the so-called secret sharing scheme algorithm, then dividing the whole of the permuted elements into a designated number of electronic information blocks and storing the blocks in separate files respectively. Restoration or decryption of the user authentication electronic information and the user attribution electronic information is preferably implemented by collecting the electronic information blocks relating to the subject electronic information from the files storing the electronic information blocks, re-permuting the information elements in the original order based on the designated order used in the dividing procedure, and connecting the re-permuted information elements to restore or decrypt the original electronic information.

The secret sharing scheme herein is a type of method for sharing secret information and includes a basic theory characterized in that some secret "s" is dispersed into n pieces and collecting k or more pieces out of the n pieces enables a complete restoration of "s", but the original information cannot be obtained from even (k - 1) pieces, and various theories similar to this basic theory. In a typical procedure, the secret "s" is secure at most (k - 1) pieces of the information are leaked, and restoration of "s" is possible at most (n - k) pieces of the information are lost. Algorithm of the secret sharing scheme is logic for actually implementing the secret sharing scheme, and is used in the form of a program for actual implementation with a computer.

The electronic information management system of the present invention preferably applies information compression to the electronic information or the electronic information blocks in the dividing procedure of the user authentication electronic information and the user attribution electronic information.
By utilization of the so-called electronic tally technology as described above, leak of electronic information by using various means can be prevented, and therefore protection of information can be further ensured.
In addition, it is preferable to store plural types of the user authentication information, and to specify type or combination of types of the user authentication information for examining purpose depending on the importance of user attribution information.

Electronic information blocks generated by dividing electronic information into a plurality of pieces may be stored in overlap in separate files. Overlap storing enables restoration of the electronic information even if some files are lost.
In the electronic information management system of the present invention, request of presenting the user attribution electronic information and actual presentation of the information can be implemented through a personal computer, a PDA, a cellular telephone, and such communication terminal devices.
It should be appreciated that the technical idea in which electronic information is divided into several pieces and the respective pieces are stored in separate files can also be made use of for protecting electronic information stored in storage of a computer system.

### Brief Description of the Drawings

Fig. 1 is a block diagram illustrating an example of a format for storing electronic information in storage in one embodiment of the electronic information management system according to the present invention.
Fig. 2 is a flow chart exemplifying a procedure for storing authentication information in the embodiment.
Fig. 3 is a flow chart exemplifying a procedure for storing digitized user attribution information in the embodiment.
Fig. 4 is a flow chart illustrating a procedure for extracting user attribution information in the embodiment.
Fig. 5 is a diagram for describing an "N - 1" method used for distributing divided electronic information to N files in overlap in the embodiment.
Fig. 6 is a block diagram illustrating an electronic information management system in which a large number of terminal devices are connected to an information management computer through network communication paths.

### Explanations of letters and numerals

- 1:: folder for members

- 11:: files used for connection
- 12a, 12b:: individual information file
- 13:: authority information file
- 21a, 21b:: public information file
- 22a, 22b:: authentication information file
- 23a, 23b:: individual attribution information file
- 31a, 31b:: electronic information block of authentication information
- 32a, 32b:: electronic information block of individual attribution information

### Best Mode for Carrying out the Invention

An electronic information management system according to the present invention will hereinafter be described in detail based on embodiments with reference to the attached drawings.

The electronic information management system of the embodiment is configured as a computer system that is connected to user communication terminal devices through communication network and stores various types of user attribution information accumulated for users, as described in figure 6.
Such user attribution information includes, for example, medical information in an electronic information management system operated by hospitals and property information in an information management system operated by banks or stock companies. Also, various types of administrative information created and accumulated by local governments may be included. Besides the above-described information, there exists a lot of information attributable to an individual who wouldn't like to disclose the information to other people. An organization that is entrusted with and stores such attribution information attributable to individuals at any time may be conducted as an electronic information management system of the embodiment. Alternatively, electronic information attributable to individuals may be deposited to a computer system possessed by a specific provider, which is to be utilized as the electronic information management system.

The electronic information management system according to the embodiment is characterized in that user authentication data are divided into pieces and the pieces are dispersed and stored, and additionally the user attribution information data are divided into pieces and the pieces are dispersed and stored corresponding to each of different stages. The electronic information management system has a high resistance against attack by a third party and therefore a high security because whole of the available information does not exist at a single location in usual.
An unauthorized third party cannot find any content of information even if he or she succeeds in stealing some information blocks, particularly in the case where electronic information is divided into information elements using the so-called electronic tally technology, the information elements is separated into a plurality of information blocks after applying random permutation, and the respective information blocks are dispersed and stored.

Also, even if the third party succeeds in stealing all of the information blocks, he or she cannot restore meaningful information unless he or she obtains the information on the division and permutation, and therefore the electronic information is secure.
Furthermore, by use of the electronic tally technology in which a signal compression process is applied to the electronic information before the dividing procedure or to the created information blocks, the electronic information can be managed in great security.
In addition, it is not permitted to collect the divided pieces and to restore or decrypt the user attribution information data, only when the user authentication check results in being acceptable. The authentication check is conducted by collecting pieces of the user authentication information data first and restoring the authentication information, then comparing authentication information presented by the user with the restored information in order to identify the user. That is, the user attribution information is stored in usual under the condition that the information is difficult to be interpreted, and therefore the user attribution information to be protected at any cost can be highly prevented from leakage.

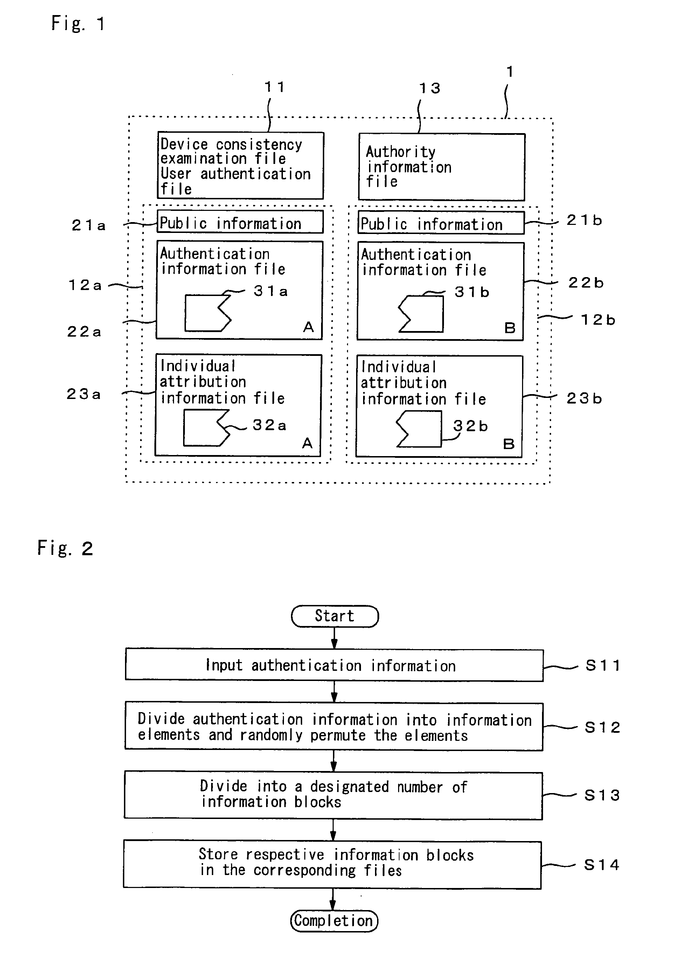

Fig. 1 is a block diagram illustrating an example of format for storing electronic information in storage of the system according to the embodiment.

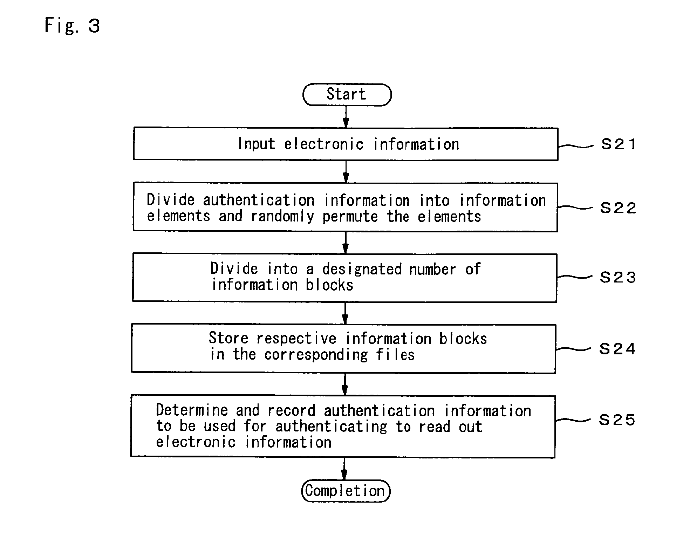

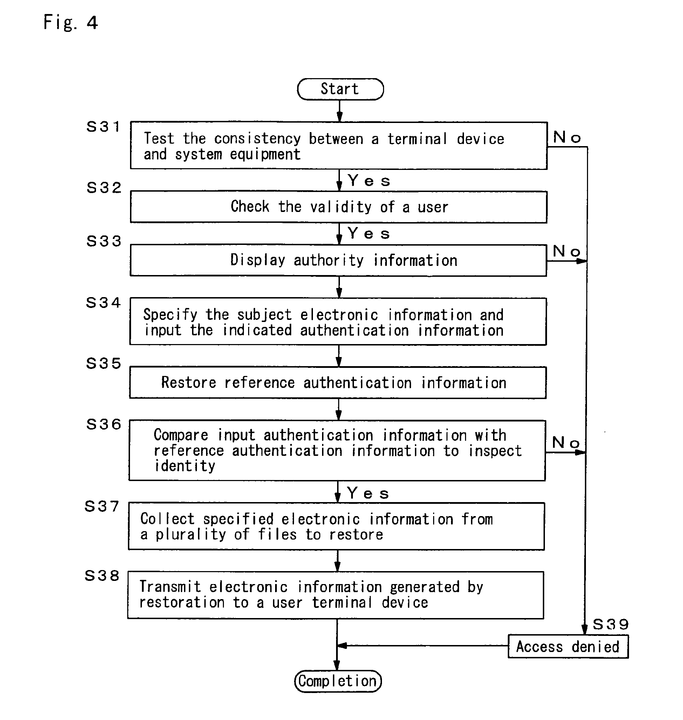

Figs. 2 and 3 are flow charts illustrating examples of procedures for storing electronic information. Fig. 4 is a flow chart illustrating procedure for extracting information attributable to user him/herself.
The electronic information management system creates a folder 1 specific to each user in the storage when the user is registered as a member. The folder 1 preferably has an extendable format such as a random file format that can extend its size at need not having a fixed size or location preliminarily specified.

A plurality of files are created in the folder 1.
The files include a file 11 used for connection that is a combination of a user authentication file and a device consistency examination file, the user authentication file for storing a member identification number (ID) and a member password (PW), which are determined upon member registration or may be changed upon request of a user, and the device consistency examination file for recording information to determine the consistency between the system and each terminal-connected device.
When some user desires to connect his/her terminal device to the electronic information management system, at first the terminal device must pass the examination for determining whether or not it has been approved and registered by the system. After passing the device consistency examination and followed by establishment of connection between the terminal device and the system, the user inputs his/her identification number (ID) and password (PW). The information of those items is then transmitted to the system, in which the input identification number (ID) and the input password (PW) are compared with the identification number (ID) and the password (PW) stored in the user authentication file respectively to examine the consistency. Only after the consistency examination is passed, the user terminal device is accepted to be connected and the system computer is accepted to be accessed.

In the folder 1, individual information files 12a and 12b are provided, in which information pieces generated by dividing individual information are stored. The number of the individual information files is not limited; though, Fig. 1 illustrates the case of two files in order to simplify the description.
The individual information files 12a and 12b include public information files 21a and 21 b, authentication information files 22a and 22b, and individual attribution information files 23a and 23b, respectively.

The public information files 21 a and 21 b are configured as so-called header files for storing indicator values without particular encryption to be used for selecting the individual information files 12a and 12b from among a large number of files, and are adapted to easily collect necessary files for information restoration or decryption.
The authentication information files 22a and 22b are used for storing authentication information to check the authority of a person who intends to access individual attribution information. User authentication may be performed in different ways, for example, with an item such as a personal identification number, an encryption key, a signature, a certificate, dynamic input value of signature, a fingerprint, a palm print, a voice print, an iris print, feature of appearance, or other biologic feature, or by a method authenticating a user with user's belongings such as an IC card or the like.

Different types of the above described authentication information are preliminarily stored, and authentication means may be selected depending on kind of electronic information to be extracted or read out. Also, when severe user authentication is required, as in the case of important information, it is possible to configure the system so as not to permit the reading out of the information unless predetermined two or more different types of authentication are consistent.
The stored electronic information can be securely ensured if authentication information is divided into a plurality of pieces 31 a and 31 b by using so-called electronic tally technology, which is stored in a plurality of different files 22a and 22b, and when necessary all the pieces are collected and the original information is restored or decrypted in a reverse manner for use.

The individual attribution information files 23a and 23b store information attributable to an individual as described above. The individual attribution information is also divided into a plurality of pieces 32a and 32b by using electronic tally technology, which is stored in a plurality of different files 23a and 23b, and all the pieces are collected and restored or decrypted to the original information for use in a reverse manner as needed.

Use of the electronic information management system requires to preliminarily store electronic information in the system. Depending on use of the system, electronic information to be stored may be created and accumulated by a hospital, a financial institution, or an administrative institution, instead of being input by the user.
A case in which a user him/herself deposits electronic information will be explained hereinafter.

An authority information file 13 is provided in the folder 1.
Only the concerned individual and specific persons authorized by the concerned individual are permitted to extract or to read out the individual attribution information. For this reason, it is checked by user authentication means whether or not a person who intends to extract or read out an individual attribution information is authorized to extract or read out the information.
The authority information file 13 stores a comparison table that defines which user authentication means should be used for each of individual attribution information.
In addition, authority information may be processed with electronic tally technology, dispersed, and separately stored in the individual information file 12.

Fig. 2 exemplifies a procedure for storing the authentication information.
The authentication information is input to the electronic information management system through a user terminal device or a computer for registration (S11). When the authentication information is input, the electronic information management system divides the electronic information at specified bit positions into a plurality of small information elements, and the plurality of the information elements that are produced by division are permuted in a designated order (S12). Then, the electronic information management system divides the whole of the permuted elements into a specified number of parts(S13), and stores the divided parts in separate files 21 a, 21 b, ... ,respectively, as electronic information blocks 31 a, 31 b, ... of the authentication information (S14).
Input devices for the authentication information should be prepared peculiarly according to each of the authentication methods to be used, because the input devices are required to be specific depending on characteristics of the respective authentication information.

Fig. 3 exemplifies a procedure for storing the digitized individual attribution information.
The individual attribution information is input to the electronic information management system through a user terminal device or a computer input device of the system (S21). When the individual attribution information is input, the electronic information management system divides electronic information on the individual attribution information at specified positions into a plurality of small information elements, and the plurality of the information elements that are produced by division are permuted in designated order (S22). Then, the electronic information management system divides the whole of the permuted elements into a specified number of electronic information blocks 32a, 32b, ... (S23), and subsequently stores the divided electronic information blocks 32a, 32b, ... of the individual attribution information in separate individual attribution information files 22a, 22b, ... , respectively (S24).

Security of the authentication information and individual attribution information may be improved using the signal compression technology.
Furthermore, only the concerned individual and specific persons authorized by the concerned individual are permitted to extract or read out the individual attribution information. For this reason, when the individual attribution information is input, an authentication method to be used for the input information is preliminarily specified depending on characteristics of the input information, and the result is recorded in the authority information file 13 (S25).

Fig. 4 illustrates the procedure for extracting or reading out the individual attribution information.
When a user requests to extract or to read out individual attribution information attributable to the user him/herself, a device consistency examination is first implemented, in which it is examined whether or not a terminal device that the user connects with the system has been approved and registered by the electronic information management system based on information preliminarily stored in a device consistency examination file (S31).
In case that the terminal device does not pass the examination, connection of the device is denied (S39).

After the terminal device is connected to the system when passing the device consistency examination, the validity of the user is checked (S32). When the user inputs his/her identification number (ID) and his/her password (PW), the system receives this information to compare with the identification number and the password stored in the user authentication file and examines respective consistencies. Neither the user terminal device nor its access to a computer of the system is accepted until the consistency examination is passed. When the user terminal device is accepted, information on the authentication method necessary to disclose the individual attribution information requested by the user is read out from the authority information file 13 and then the necessary authentication method is indicated in a display (S33).

The user inputs his/her specified authentication information from the corresponding input device. When the system receives the input authentication information (S34), it collects the preliminarily stored electronic information blocks 31 a and 31 b of the authentication information of the user from the authentication information files 22a and 22b, and then restores or decrypts the original authentication information by re-permuting the information elements in correct order in a manner reverse to that used for the division and dispersion at the time of storing the authentication information (S35). The original authentication information restored in this manner is then compared with the input authentication information to determine whether or not the input information is authentic (S36), and in case that the input authentication information is not authentic, further access is denied (S39).

When the input authentication information is consistent with the restored or decrypted reference authentication information, the electronic information management system collects the stored electronic information blocks 32a and 32b of the subject individual attribution information from the individual attribution information files 23a and 23b, and restores or decrypts the original information by re-permuting the information elements in correct order in a manner reverse to that used for the division and dispersion in storing procedure of the original individual attribution information (S37). The electronic information restored or decrypted in this manner is transmitted to the user terminal device (S38) to respond to the user's request.

In the electronic information management system according to the embodiment, it is extremely difficult to steal information contents with attacking from outside by an unauthorized third party, because subject electronic information is divided into pieces and the pieces are dispersed and stored in a plurality of files in usual. In particular, in the case of dividing the electronic information using the electronic tally technology, an extremely high security can be obtained.
And, when individual attribution information is provided to a user, only the authentication information which is necessary for consistency examination is restored, and the subject individual attribution information is not restored until consistency examination of the authentication information is passed. That is, the risk of information leak from the system or communication paths is low, because only the bare minimum of electronic information is restored and then transmitted.

The individual information files 12a and 12b dispersed in the manner described above may be provided to the user so that the user him/herself can manage the individual attribution information. Alternatively, a computer possessed by the user may be provided with information management software for implementing the above-described procedure, so that the user him/herself can manage information by dividing the individual attribution information and storing it in a plurality of individual information files in the manner described above.

And if necessary, a method for correctly restoring the information even if some of the files are lost may be selected in the storing procedure of the electronic information.
As an example of such method, Fig. 5 shows a diagram for describing so-called "N - 1" method for distributing divided electronic information to N files in overlap. When the original information is divided into three pieces of divided information (1), (2) and (3), which are then stored in three different files A, B and C, two different pieces of the divided information are stored in each file. Even if the divided electronic information cannot be collected from any one of the files, for example the file A, due to the damage or loss, complete restoration of the original information is possible by using the remaining two files B and C.

The above description presents an example in which three files are used; however, in the case of using N files, where N represents an arbitrary number, the original information may be completely restored, even if any one of the N files is lost, from the remaining (N - 1) files in the same manner by storing two pieces overlapped in each file.
Using such "N - 1" method, easy recovery of the original information may be implemented without affecting security of the information, even if any one of the information files is lost.

Furthermore, storing n pieces of divided information in N files to increase number of overlap, the original information can be restored even if up to k files are lost, where k represents an arbitrary integer satisfying the relationship of (n - 1) > k ≥ 1. Such a method is called "N - k" method.

As described in detail above, the electronic information management system of the present invention can easily realize to manage electronic information attributable to individuals secured against attacks by unrelated parties.

## Claims

1. An electronic information management system configured as a computer system for providing a user attribution electronic information attributable to a user after authenticating the user, comprising a processing unit and a plurality of files,
wherein the processing unit divides each of electronic information of a user authentication information and a user attribution information into pieces, stores the pieces in separate files respectively, and saves a storage information explaining procedures of storing of the pieces in public information files, and when the processing unit receives a request of a user attribution information, the processing unit reads out the storage information from one of the public information files, collects the pieces of the electronic information of the user authentication information from the separate files and decrypts or restores the user authentication information based on the storage information, then compares the decrypted or restored user authentication information with input user authentication information to identify the user, and collects the pieces of the electronic information of the user attribution information from the respective files and decrypts or restores the user attribution information and provides the decrypted or restored information to the user, only after the user authentication is passed.

2. The electronic information management system according to claim 1, wherein the division of the user authentication electronic information and the user attribution electronic information is implemented by dividing the electronic information at designated bit positions into a plurality of small information elements, permuting the plurality of the information elements in an order which is designated using the secret sharing scheme algorithm, and dividing the whole of the permutation into a designated number to store the information in separate files as electronic information blocks, **characterized in that** the decryption of the user authentication electronic information and the user attribution electronic information is implemented by collecting the electronic information blocks of subject electronic information from the files storing the electronic information blocks, re-permuting the information elements in original order based on the designated order, and connecting the re-permuted information elements to decrypt the original electronic information.

3. The electronic information management system according to claim 2, wherein information compression is applied to the electronic information or the electronic information blocks when the user authentication electronic information and the user attribution electronic information are divided.

4. The electronic information management system according to any of claims 1 to 3, wherein plural types of the user authentication information are stored, and a type and a combination of types of the user authentication information for confirmation purpose can be specified from a list stored in the public information file depending on the importance of user attribution information.

5. The electronic information management system according to any of claims 1 to 4, wherein the electronic information can be decrypted even if between one and k files are lost, where k is an integer satisfying the relationship of (n - 1) > k ≥ 1, by dividing the electronic information into n pieces and storing them in overlap in separate files.

6. The electronic information management system according to any of claims 1 to 5, wherein the request of provision of the user attribution electronic information and the actual provision of the information are implemented through a communication terminal device.
